Europäisches Patentamt

European Patent Office

Office européen des brevets

(19)

(11) **EP 0 886 439 A2**

(12) **EUROPEAN PATENT APPLICATION**

(43) Date of publication:
23.12.1998 Bulletin 1998/52

(51) Int. Cl.⁶: **H04N 5/235**

(21) Application number: 98107544.3

(22) Date of filing: 24.04.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 20.06.1997 KR 9725980

(71) Applicant:
**Samsung Electronics Co., Ltd.**
**Suwon-city, Kyungki-do (KR)**

(72) Inventor: **Jung, Lee-hwa**
**Osan, Kyonggi-do (KR)**

(74) Representative:
**Grünecker, Kinkeldey,**
**Stockmair & Schwanhäusser**
**Anwaltssozietät**
**Maximilianstrasse 58**
**80538 München (DE)**

(54) **Device and method for controlling shutter speed of a digital still camera**

(57) Disclosed are a method for controlling the shutter speed of a digital still camera and a method thereof. An optical block unit opens/closes a shutter according to the shutter speed and condenses light received from an object during a predetermined exposure time, and a photoelectric conversion unit forms the light received through the optical block unit by a photoelectric conversion. In addition, a movement detection unit detects a movement variation between the present image signal and an image signal previously applied prior to the present image as a shutter button for opening/closing the shutter is turned on, and a shutter speed control unit controls the shutter speed of the optical block unit proportionally to the movement variation detected by the movement detection unit.

FIG. 3

# Description

## BACKGROUND OF THE INVENTION

### Field of the Invention

The present invention relates to a device for controlling a shutter speed of a digital still camera and a method thereof, and more particularly to a device for controlling a shutter speed of a digital still camera and a method thereof capable of minimizing a lowering of a photographed still image which is caused by the movement of an object.

### Description of the Related Art

An electronic still camera is a still camera for next generation which converts an image signal of a still image into an electrical signal and then performs electrically signal processing such as recording, reproducing, etc. A digital still camera which is one of the electric still cameras processes target signals digitally.

In the electronic still camera, no darkroom work or other chemical process for developing a film which is the necessary process for a conventional silver salt film camera is not needed. Instead, it is possible to recognize the photographed image immediately. In addition, since it is possible to perform a remote transmission or a postprocessing in a computer because the recorded image information is electronically processed, the expectation and interest in the electronic still camera as one of imaging devices in the multimedia age has been concentrated.

Since Sony has announced a camera of analog type which records data in a floppy disk of 2 inches in 1981, various related products have been introduced and sold until now. In the early days, using the analog type is the main stream. In 1984, since the standard of a video floppy disk of 2 inches has been unified, a camera of new type with a low price for public welfare come into the spotlight to substitute for the silver salt film camera.

The camera of analog type adapted a method of recording the image signal which is frequency-modulated by rotating the video floppy disk as much as 3,600 times per second. However, due to the technical problem and the constraint in establishing the standard, the camera of analog type could not be spread widely. On the contrary, the electronic still camera which performs electric signal processing is now broadening the market in the field requiring a real time processing or postprocessing at high speed.

With development of the semiconductor technology, the camera manufactures such as Fuji film, Olympus, Apple computer, Kodak, etc. have developed and sold digital still cameras applying the digital signal processing technology since 1986, and thereby the digital still camera come into the spotlight instead of the camera of analog type. Out of the digital still cameras, a digital card camera is the most typical one which employs an integrated circuit (IC) memory card, i.e., a personal computer (PC) card as a recording medium.

The digital card camera has the following characteristics which are different from the camera of analog type:

First, since it is unnecessary to have a rotation driving unit such as a floppy disk drive, it is very trustworthy and easy to miniaturize the camera.

Second, since the camera is not influenced by a modulation noise peculiar to the magnetic recording or a jitter caused by a driving system, the still image which is stable can be photographed.

Third, the image information can be recorded and processed as the digital data.

Fourth, it is possible to perform a minute high quality processing including performing a complicated signal processing such as a spatial relation and employing a color filter array for color separation of a charge-coupled device (CCD) capable of achieving a high resolution.

Fifth, a lowering of the image quality can be removed in transmitting or postprocessing such as a dubbing.

Sixth, the camera is easily interfaced with various information devices such as the computer and has high possibilities of the system.

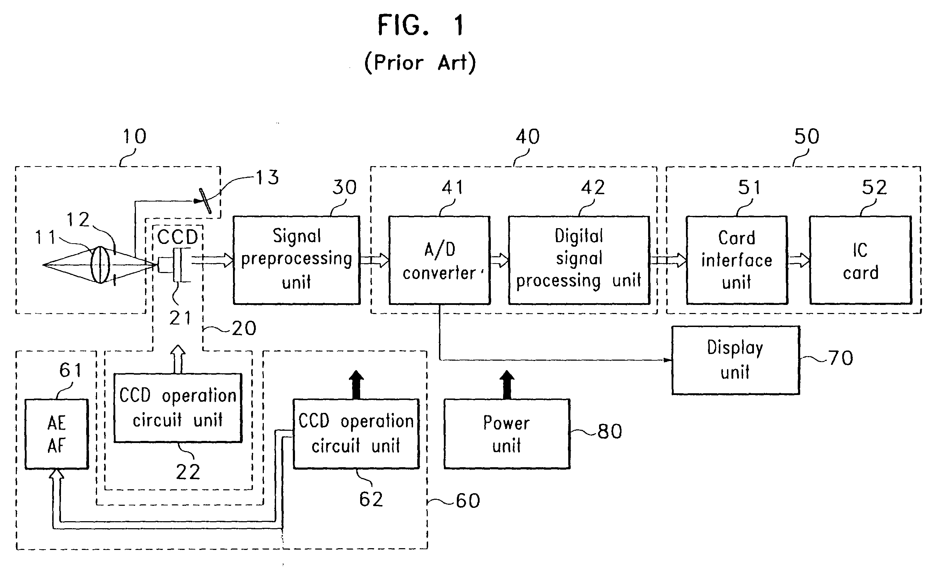

Hereinafter, the conventional digital card camera is explained referring to FIG. 1.

FIG. 1 is a block diagram illustrating the conventional digital card camera. As shown in the drawing, the conventional digital card camera includes: an optical block unit 10 having a main lens 11 for condensing an incident light, a shutter 12 for receiving/blocking the condensed light and a viewfinder 13 for recognizing an object; a photoelectric conversion unit 20 having a charge-coupled device (CCD) 21 for converting a two-dimensional optical image into a one-dimensional electrical signal photoelectrically and a CCD operation circuit unit 22 for driving the CCD 21; a signal preprocessing unit 30 having circuits for color separation, black and white level setting and a tonal conversion; a main signal processing unit 40 having an analog/digital (A/D) converter 41 which is connected to the signal preprocessing unit 30 and performs an analog-digital conversion and a digital signal processing unit 42 for compressing/expanding data of a Joint Photographic Coding Experts Group (JPEG) which is the compression standard of the still image of an International Standard Organization (ISO); a recording/reproducing unit 50 which receives the output of the main signal processing unit 40 through a card interface unit 51 and recording/reproducing the image data in an Integrated Circuit (IC) card 52 which is the recordable medium; a camera function unit 60 having an automatic exposure/automatic focus (AE/AF) adjusting unit 61 for performing an automatic exposure/automatic focus adjusting function which is the essential function of the camera and a camera control unit 62 for controlling the automatic exposure/automatic focus adjusting unit 61; a display unit 70 for displaying the output of the analog/digital conversion unit 41 to the outside through a display device such as a liquid crystal device (LCD); and a power unit 80 including an alternating current/direct current (AC/DC) converter and a battery.

Similarly in the conventional silver salt film camera, the digital still camera has functions of controlling the automatic exposure or automatic focus by a strobe light and of forming the two-dimensional optical image by the photographing lens. However, since screen sizes of the CCD and the silver salt film of 35mm are different, more strict performance is required to the digital still camera.

For example, the screen size of the CCD of 1/2 inch is 8mm diagonally which is about 1/5 of 35mm. It is difficult to simply compare the silver salt film and the CCD screen since the resolutions of the silver salt film and the CCD screen are different. However, in order to obtain the characteristic of the same modulation transfer function (MTF), the lens for the electronic still camera requires a high performance since the screen size of the lens is smaller than the lens for the silver salt camera. The different screen sizes mean that the strict performance is required in the focusing.

Controlling the exposure is an essential function in photographing a good image with a camera. Especially in the electronic still camera, since an exposure latitude of the CCD is narrower than the silver salt film by 1 to 2 digits, an exposure control technology with a high precision within an exposure precision plus/minus 1/6EV (exposure value) is required.

Comparing with a movie camera recording a moving image, the electronic still camera has a strict requirement regarding the picture quality including the resolution or a signal to noise ratio to record the still image. Accordingly, in the electronic still camera, it is conventional to set the sensitivity of the CCD by using a lens having a high performance and an image pickup device having a large number of pixels which have a better MTF characteristic and a better characteristic of surrounding light than in the movie camera or considering the signal to noise ratio.

Moreover, since the definition of an outline determines whether the image quality is good or bad, a method of photographing a frame image which is made of two field images has been investigated.

To form the two-dimensional optical image of the image pickup device clearly is the common assignment to the electronic still camera, the silver salt film camera, the movie camera, etc. However, regarding following electrical signal processing, i.e., various processing performed after converting the two-dimensional optical image into the one-dimensional electrical signal or recording/reproducing the signal in a electrical medium, it is quite different from the silver salt camera.

An image processing block of the conventional digital camera includes: an optical processing unit for processing an object into an optical image; a photoelectric conversion unit for converting the two-dimensional optical image into one-dimensional electrical signal; an analog preprocessing unit; and a digital signal processing unit located at a main processing unit.

The object which is recognized in the viewfinder is formed into the two-dimensional optical image on the photoelectric conversion element, i.e., CCD by the main lens, and the information on the luminance and color of the optical image is converted into the one-dimensional electrical signal by the photoelectric conversion element.

On the other hand, the optical color separation process is performed by a color separating element such as a color filter in the CCD. The color separation processing after the photoelectric conversion is performed by a color separation circuit which is synchronized with a color filter array, and informations on red (R), green (G) and blue (B) colors are displayed according to the stress of the electrical signal.

After the RGB signals are analog-processed through the tonal conversion, a black balance and a white balance, etc. the signals are converted into the digital data by the A/D converter. The preprocessing up to the analog/digital conversion is conventionally analog-processed. However, with the development of the digital signal processing technology and the semiconductor technology, the signals of back-end from the CCD output is gradually now being digital-processed.

The digital image data of a natural image in which the analog to digital conversion is performed has a large amount of data. For example, in the case of digitalizing luminance/chrominance (Y/C) signals using the CCD having 400 thousands of pixels to 8-bit data respectively, the total amount of data (S) is as follows:

$$S = 2 \times 4 \times 10^5 \times 8 \text{ bits} = 6.4 \times 10^6 \text{ bits} = 0.8 \times 10^6 \text{ bytes} = 0.8 \text{ Mbyte}$$

It indicates that only one image can be recorded in a 3.5 inch floppy disk of 2HD. As indicated, the data amount of the natural image is much larger than that of a character image.

Accordingly, it takes about 45 minutes (2,667 seconds) to transmit one natural image in a line of 2.4kbps which is the initial speed of modem, and takes 102 seconds even though using 64kbps of an Integrated Services Digital Network (ISDN).

It is possible to record the unchanged original data of the RGB signals without compressing them. However, it is efficient to compress or expand the data in order to easily record, reproduce, process and transmit them at a low price.

In the case of using the JPEG technology which is the international standard of the compression technology regarding the color still image having high resolution, it is possible to transmit the image through the line of 2.4kbps during 2 minutes without any lowering the image quality by compressing the image to about 1/20, or through the line of ISDN during 5 seconds. The JPEG technology is variously applied to many multimedia fields relating to the natural image, such as the electronic still camera.

Recently, in order to apply to the still image such as the images for a medical use, the investigation of resources, the digital still camera of high quality, the art, the aerial map manufacturing and an automatic recognition, the standardization of JPEG-2000 is actively progressed to set up the international standard (IS) until 2000.

In the above-described digital still camera, the device for controlling the shutter speed and its method thereof are explained as follows.

First, the shutter speed and shutter type of the conventional digital still cameras which are introduced will be explained. In the case of DS-2000 Dije which is a supply model of Fuji Film, it is an electronic shutter and the shutter speed is 1/4 to 1/750 second. In the case of DS-505 which is a high class model of Fuji Film, it is both the electronic and mechanical shutter and the shutter speed is 1 to 1/2000 second. The VC-1100 DELTIS which is a supply model of Olympus co. is the CCD shutter and the shutter speed is 1/8 to 1/10,000 second. In addition, the Quick Take 100 which is a supply model of Apple Computer is the electronic shutter and the shutter speed is 1/30 to 1/175 second. The speed of the above-described shutters is manually operated.

Generally, the conventional electronic digital still camera has a structure capable of observing the image which is received at the optical block unit 10 through the viewfinder 13 or the display unit 70.

At this time, the camera operator places a target object to be photographed in a view angle of the camera and then locates the object at a proper position within the screen by the automatic function of the camera and manual operation of the operator. After that, as the shutter of the optical block unit 10 is opened/closed during the exposure time proportional to a predetermined shutter speed by the shutter operation, the light which is received during the time is accumulated through the photoelectric conversion and the target image which is the still image to be photographed is picked up. By compressing the target image data through the digital signal processing, the data is stored in the IC card 52, thereby completing the photographing.

After that, the target image stored in the IC card 52 is outputted through the image output device such as the printer, monitor, communication device, film printing device, etc. or stored in a storage medium.

However, in the case that the active object is to be photographed through thee conventional digital camera whose shutter speed is operated manually, it is difficult to properly control the shutter speed according to the state of the object.

In other words, there is no problem in photographing the still object. However, when the object which moves rapidly is photographed with a camera whose shutter speed is set at a low speed, the blurred image remains along the trace of the movement caused by the continuous accumulation of the light.

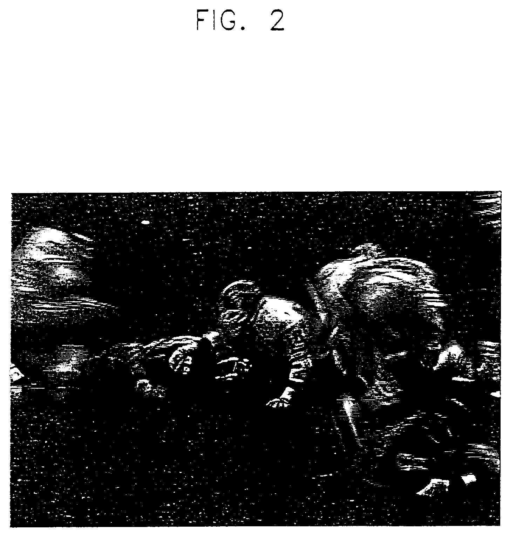

FIG. 2 is a view illustrating the remaining images blurred along the trace of the movement caused by the continuous accumulation of the light. It is the tenth frame of a Football Image which is one of the standard test images.

## SUMMARY OF THE INVENTION

Therefore, it is an object of the present invention to provide a device for controlling a shutter speed of a digital camera and a method thereof capable of obtaining a target image of high quality without remaining blurred images by detecting an activitivity of the object in continuous frames and picking up the target image which is a still image to be photographed through controlling the shutter speed of an optical block unit proportionally to the activitivity, when observing the image which is photographed in an photoelectric conversion unit and observed through a viewfinder or a display unit.

It is another object of the present invention to provide a device for controlling a shutter speed of a digital camera and its method thereof capable of acquiring a target image of high quality regardless of the reduction of the exposure time by picking up the target image which is the still image to be photographed through controlling an image pickup gain of the photoelectric conversion unit proportionally to the activity.

According to one aspect of the present invention, the optical block unit opens/closes the shutter according to a shutter speed and condenses light received from the object during a predetermined exposure time, and the photoelectric conversion unit forms the light received through the optical block unit by the photoelectric conversion. In addition, a movement detection unit detects the movement variation between the present image signal and an image signal previously applied prior to the present image as a shutter button for opening/closing the shutter is turned on, and a shutter speed control unit controls the shutter speed of the optical block unit proportionally to the movement variation detected by the movement detection unit.

According to another aspect of the present invention, an image pickup gain control unit controls the image pickup gain of the photoelectric conversion unit so that the shutter speed control unit can be proportional to the amount of the movement variation.

Preferably, the movement detection unit includes a delay memory unit for generating the previous image signal by delaying the output of the photoelectric conversion unit during one display period; a differential image calculating unit for obtaining a differential image between the present image signal and the previous image signal as the shutter button is turned on; and a movement variation calculating unit for calculating a movement variation which is obtained by averaging summed all the pixel values of the differential image after obtaining absolute values of each pixel values of the differential image.

According to the method of the present invention, as the shutter button for opening/closing the shutter is turned on, the amount of the movement variation between the present image signal and the image signal which is applied to the previous screen is detected. The shutter speed which is the opening/closing speed of the shutter is controlled to be proportional to the movement variation. In addition, the shutter is opened/closed according to the shutter speed and the light which is received from the object during a predetermined exposure time is condensed. The condensed light is formed into the optical image through the photoelectric conversion, thereby photographing the target image.

According to the method of the present invention, in the step of controlling the shutter speed, the image pickup gain of the photoelectric conversion unit is controlled to be proportional to the movement variation.

Moreover, the step of detecting the movement includes the steps of: generating the previous image signal by delaying the output of the photoelectric conversion unit during one display period; obtaining the differential image between the present image signal and previous image signal as the shutter button is turned on; and calculating the amount of the movement variation by averaging the summed pixel values of the differential image after obtaining the absolute values of each pixel value of the differential image.

## BRIEF DESCRIPTION OF THE DRAWINGS

A more complete appreciation of the present invention, and many of the attendant advantages thereof, will become readily apparent as the same becomes better understood by reference to the following detailed description when considered in conjunction with the accompanying drawings in which like reference symbols indicate the same or similar components, wherein;

FIG. 1 is a block diagram illustrating a conventional digital card camera;
FIG. 2 is a view illustrating an image containing a remaining image blurred along the trace of the movement caused by the continuous accumulation of light,
FIG. 3 is a block diagram illustrating a device for controlling a shutter speed of a digital still camera according to the present invention;
FIG. 4 is a view illustrating a differential image between the image illustrated in FIG. 2 and the previous image through binarization; and
FIG. 5 is a flow chart illustrating a method for controlling the shutter speed of a digital still camera according to the present invention.

## DETAILED DESCRIPTION OF THE PREFERRED EMBODIMENTS

The objects, characteristics and advantages of the above-described invention will be more clearly understood through the preferable embodiments referring to the attached drawings.

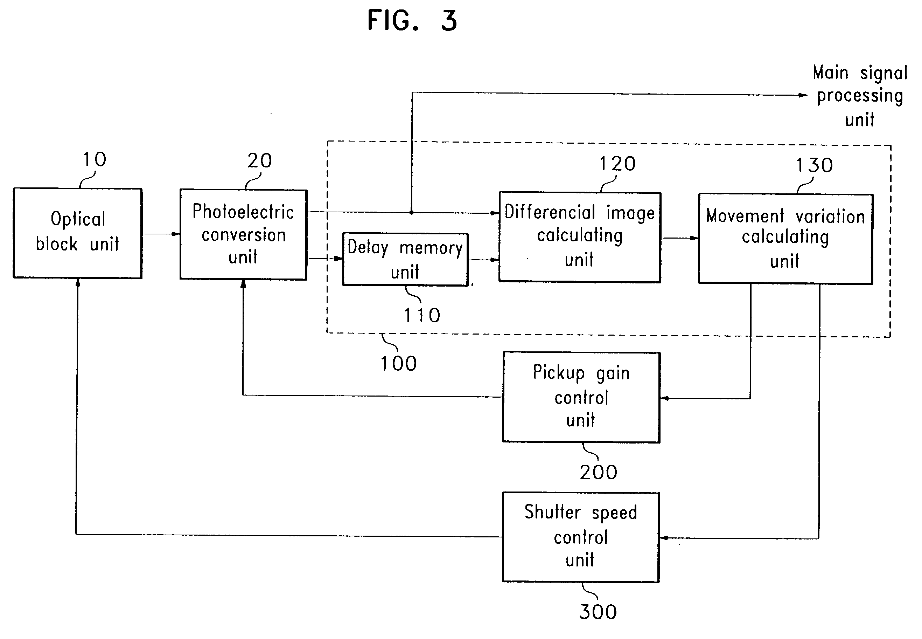

Hereinafter, the preferred embodiment of a device for controlling a shutter speed of a digital still camera according to the present invention is explained with reference to FIG. 3.

FIG. 3 is a block diagram illustrating a preferred embodiment of the device for controlling the shutter speed of the digital still camera according to the present invention. In the drawing, same reference numerals are allowed to components illustrated in the conventional digital card camera of FIG. 1.

According to the preferred embodiment of the present invention, as shown in FIG. 3, an optical block unit 10 opens/closes a shutter based on the shutter speed which is the opening/closing speed of the shutter 12 and condenses light received from an object during a predetermined exposure time, and a photoelectric conversion unit 20 forms the light received through the optical block unit 10 into the optical image through the photoelectric conversion. Moreover, a movement detection unit 100 detects the movement variation between the present image signal which is inputted presently and the image signal which is applied prior to the present image signal as a shutter button (not illustrated) for opening/closing the shutter 12 is turned on, and a shutter speed control unit 300 controls the shutter speed of the optical block unit 10 to be proportional to the movement variation which is detected from the movement detection unit 100.

Here, the device for controlling the shutter speed of the digital still camera can further include an image pickup gain control unit 200 for controlling an image pickup gain of the photoelectric conversion unit 20 to be proportional to the movement variation.

The movement detection unit 100 includes a delay memory unit 110 for generating a previous image signal by delaying the output of the photoelectric conversion unit 20 during one display period; a differential image calculating unit 120 for obtaining the differential image between the previous image signal and the present image signal as the shutter button is turned on; and a movement variation calculating unit 130 for calculating the movement variation by averaging summed pixel values of the differential image after obtaining the absolute values of each pixel value of the differential image.

Here, a predetermined one display period is preferably one frame period or one field period.

The movement variation calculating unit 130 can calculate the movement variation by summing up the all pixel values of the differential image, after obtaining the square values of each pixel value of the differential image.

The operation of the preferred embodiment of the device for controlling the shutter speed of the digital still camera according to the present invention having the above structure is explained in detail with reference to FIG. 3.

First, when power of the digital still camera is turned on, a viewfinder 13 or a display unit 70 observes an image which is continuously received through the optical block unit 10.

At this time, the operator who manipulates the digital still camera places the target object to be photographed within a view angle of the camera and then locates the object at a proper position within the screen by an automatizing function of the camera and a manual operation of the operator, thereby turning on the shutter button (not illustrated).

Accordingly, the optical block unit 10 opens/closes the shutter 12 based on the set shutter speed and condenses the light received from the object during a predetermined exposure time through the shutter 12. The photoelectric conversion unit 20 picks up the target image which is the still image to be photographed by accumulating the light received during a predetermined exposure time. After that, by compressing the target image data through the digital signal processing, the compressed data is stored in an IC card 52, thereby completing the photographing.

The movement detection unit 100 of the present invention generates the previous image signal by delaying the output of the photoelectric conversion unit 20 for a predetermined display period through the delay memory unit 110. As the shutter button is turned on, the differential image between the present image signal and the previous image signal is calculated through the differential image calculating unit 120. After obtaining the absolute values of each pixel values of the differential image through the movement variation calculating unit 130, all the pixel values are summed up, thereby calculating the movement variation.

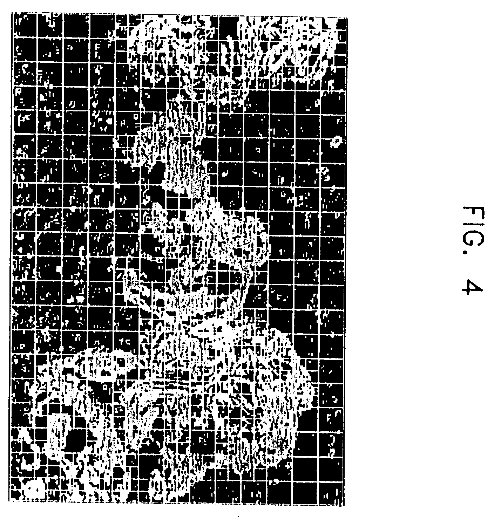

FIG. 4 is an illustrative view which is obtained by binarizing the differential image between the image illustrated in FIG. 2 and the previous image and then dividing the binarized image into a block size of 16 pixels X 16 pixels.

Here, the predetermined display period is one frame period or one field period.

The above process is indicated through following mathematical expressions. Taking any image signal as $Y(x,y)$, the previous image signal $Y_{n-1}(x,y)$ and the present image signal $Y_n(x,y)$ are defined as follows:

$$Y_n(x,y), 1 \leq x \leq N, \ 1 \leq y \leq M$$

$$Y_{n-1}(x,y), \ 1 \leq x \leq N, \ 1 \leq y \leq M$$

Here, $Y(x,y)$ indicate a signal having a $x^{th}$ pixel value in the horizontal axis and a $y^{th}$ pixel value in the vertical axis. M and N mean the total number of pixels in the horizontal and vertical axes, respectively.

The value $\Delta Y$ which is obtained by averaging the summed absolute values of the differential image between the present image and the previous image is obtained by the following expression.

$$\Delta Y = \frac{1}{M \times N} \sum_{x=1}^{M} \sum_{Y=1}^{N} |Y_n(x,y) - Y_{n-1}(x,y)|$$

Here, the movement variation is defined with the value $\Delta Y$ which is obtained by averaging the summed absolute values of the different image. It is also possible to use the value $\Delta Y^2$ which is obtained by averaging the summed square values of the absolute values of the difference value as follows.

$$\Delta Y^2 = \frac{1}{M \times N} \sum_{x=1}^{M} \sum_{Y=1}^{N} [Y_n(x,y) - Y_{n-1}(x,y)]^2$$

After that, the shutter speed control unit 300 controls the shutter speed of the optical block unit 10 and the pickup gain of the photoelectric conversion unit 20 to be proportional to the movement variation detected from the movement detection unit 100, i.e., the value $\Delta Y$ which is obtained by averaging the summed absolute values of the differential image or the value $\Delta Y^2$ which is obtained by averaging the summed square values of absolute values of the differential image.

Assuming that the shutter speed is S and the pickup gain is G,S and G are expressed in the following equations.

$$S = C_1 \times \Delta Y \text{ and } G = C_2 \times \Delta Y \text{ or}$$

$$S = C_1 \times \Delta Y^2 \text{ and } G = C_2 \times \Delta Y^2$$

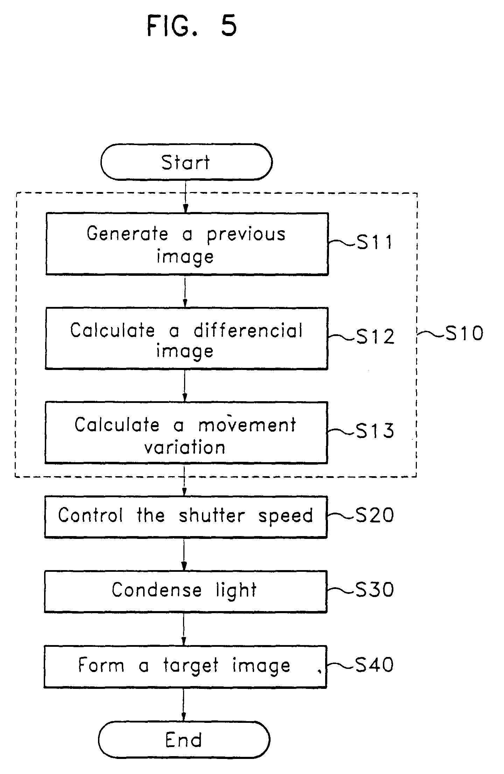

Hereinafter, the method for controlling the shutter speed of the digital still camera according to the present invention is explained with reference to FIG.5. FIG. 5 is a flow chart illustrating the method for controlling the shutter speed of the digital still camera.

As shown in the drawing, the method for controlling the shutter speed includes the steps of: detecting the movement variation between the present image signal which is inputted presently and the image signal which is applied prior to one display period as the shutter button for opening/closing the shutter 12 is turned on (step 10); controlling the shutter speed which is the opening/closing speed of the shutter to be proportional to the movement variation (step 20); opening/closing the shutter based on the shutter speed and condensing the light received from the object during a predetermined exposure time (step 30); and photographing the target image by forming the incident light into the optical image through the photoelectric conversion (step 40).

Here, in the step 30 of controlling the shutter speed, it is desirable to control the pickup gain of the photoelectric conversion unit 20 to be proportional to the movement variation.

The step 10 of detecting the movement includes the steps of: generating the previous image signal by delaying the output of the photoelectric conversion unit 20 during one display period (step 11); obtaining the differential image between the present image signal and the previous image signal as the shutter button is turned on (step 12); and calculating the movement variation which averages the summed pixel values of the differential image after obtaining the absolute values of each pixel value of the differential image (step 13).

Here, the predetermined display period is one frame period or one field period.

At the step 13 of calculating the movement variation, the movement variation can be calculated by averaging the summed pixel values of the differential image after obtaining square values of each pixel value of the differential image.

The process for performing the method for controlling the shutter speed of the digital still camera according to the present invention having the above structure is explained with reference to FIGs. 3 to 5.

First, when the previous image signal is generated by delaying the output of the photoelectric conversion unit 20 through the delay memory unit 110 during one display period at the step 11 of generating the previous image of the step 10 of detecting the movement, the differential image between the present image signal and the previous image signal is obtained through the differential image calculating unit 120 at the step 12 of calculating the differential image as the shutter button is turned on.

After obtaining the absolute values of each pixel value of the differential image through the movement variation calculating unit 120 at the step 13 of calculating the movement variation, the movement variation which is obtained by averaging the summed pixel values of the differential image can be calculated. The movement variation can also be calculated by averaging the summed square values of all the pixel values of the differential image.

After that, at the step 20 of controlling the shutter speed, the shutter speed which is the opening/closing speed of the shutter 12 is controlled to be proportional to the movement variation and simultaneously the pickup gain of the photoelectric conversion unit 20 is controlled to be proportional to the movement variation.

Accordingly, when the shutter is opened/closed according to the shutter speed and the incident light received from the object during a predetermined exposure time is condensed through the optical block unit 10 at the step 30 of condensing light, the target image is picked up and photographed by forming the incident light into the optical image through the photoelectric conversion at step 40 of forming the target image. After that, by compressing the target image data through the digital signal processing, the compressed data is stored in the IC card 52, thereby completing the photographing.

The target image stored in the IC card 52 is outputted through the image output devices such as the printer, monitor, communication device, film print device, or stored in the storage medium.

According to the present invention, since the shutter speed and the pickup gain are controlled according to the movement state of the active object in photographing the active object, the target image of high quality which contains no remaining blurred image can be acquired.

As described above, in explaining the process for performing the method for controlling the shutter speed of the digital still camera according to the present invention, the preferred embodiments of the device for controlling the shutter speed of the digital still camera are also explained. Since most of performing steps comprising the method for controlling the shutter speed of the digital still camera according to the present invention can be processed programmably by the processor equipped in the digital still camera, using the steps must be dependent on the right of the present invention.

While there have been illustrated and described what are considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.

**Claims**

1. A device for controlling a shutter speed of a digital still camera comprising an optical block unit for opening/closing a shutter according to the shutter speed and condensing an incident light received from an object during a predetermined exposure time; and a photoelectric conversion unit for forming the incident light received by said optical block unit into an optical image through a photoelectric conversion, which picks up and photographs a target image which is a still image to be photographed, comprising:

   a movement detection unit for detecting a movement variation between a present image signal which is inputted presently and a previous image signal which is applied prior to a predetermined display period; and

a shutter speed control unit for controlling the shutter speed of said optical block unit proportionally to the movement variation detected by said movement detection unit.

2. The device of Claim 1, further comprising a pickup gain control unit for controlling a pickup gain of said photoelectric conversion unit to be proportional to said movement variation.

3. The device of Claim 1, wherein said movement detection unit comprises:

a delay memory unit for generating the previous image signal by delaying output of said photoelectric conversion unit during said display period;

a differential image calculating unit for obtaining a differential image between the present image signal and the previous image signal as a shutter button is turned on; and

a movement variation calculating unit for calculating the movement variation which is obtained by averaging summed all the pixel values of said differential image after performing a predetermined operation so that each pixel value of said differential image can have a value above zero.

4. The device of Claim 1 or 3, wherein said predetermined display period is one frame period or one field period.

5. The device of Claim 3, wherein said predetermined operation includes one of an absolute value operation and a square operation.

6. A method for controlling a shutter speed of a digital still camera comprising an optical block unit for condensing light received from an object: and a photoelectric conversion unit for forming the incident light received by said optical block unit into an optical image through a photoelectric conversion, which picks up and photographs a target image which is a still image to be photographed, comprising the steps of:

detecting a movement variation between a present image signal which is inputted presently and a signal which is applied prior to one display period, as a shutter button for opening/closing the shutter is turned on;

controlling the shutter speed which is an opening/closing speed of said shutter to be proportional to said movement variation;

opening/closing said shutter according to said shutter speed and condensing the light received from the object during a predetermined exposure time; and

photographing said target object by forming said incident light into the optical image through the photoelectric conversion.

7. The method of Claim 6, further comprising the step of controlling a pickup gain of said photoelectric conversion unit to be proportional to said movement variation.

8. The method of Claim 6, wherein said step of detecting the movement variation comprises the steps of:

generating the previous image signal by delaying output of said photoelectric conversion unit during a predetermined display period;

obtaining a differential image between the present image signal and previous image signal as said shutter button is turned on; and

calculating the movement variation by averaging summed pixel values of said differential image after performing a predetermined operation so that each pixel value of said differential image can have a value above zero.

9. The method of Claim 6 or 8, wherein said predetermined display period is one frame period or one field period.

10. The method of Claim 8, wherein said predetermined operation includes one of an absolute value operation and a square operation.

# FIG. 1

## (Prior Art)

EP 0 886 439 A2

FIG. 2

# FIG. 3

FIG. 4

# FIG. 5

Start

Generate a previous image — S11

Calculate a differencial image — S12 — S10

Calculate a movement variation — S13

Control the shutter speed — S20

Condense light — S30

Form a target image , — S40

End